# FASCICULE DE BREVET EUROPEEN

(11) **EP 0 681 111 B1**
(45) Date de publication et mention de la délivrance du brevet: **02.12.1998**
(21) Numéro de dépôt: 95401046.8
(22) Date de dépôt: 05.05.1995
(51) Int. Cl.: F16C 1/14, F16C 1/20, F16C 11/04, F16C 27/06

(54) **Dispositif antivibratoire pour câble de commande travaillant en traction**
Dämpfungsvorrichtung für einen Bowdenzug
Antivibration device for a traction operated cable control

(30) Priorité: 05.05.1994 FR 9405525
(43) Date de publication de la demande: 08.11.1995
(73) Titulaire: SYSTEMES B L G, F-60730 Ste Geneviève (FR)
(72) Inventeur: Tate, Jean-Jacques, F-60500 Chantilly (FR); Heintz, Jean-Christophe, F-60000 Beauvais (FR)
(74) Mandataire: Schrimpf, Robert

(56) Documents cités:
- EP-A- 0 499 531
- FR-A- 1 522 596
- FR-A- 2 426 829
- FR-A- 2 564 162
- FR-A- 2 634 839
- GB-A- 682 449
- GB-A- 2 180 907
- US-A- 5 015 136

## Description

La présente invention concerne le domaine des commandes à câbles et plus particulièrement un dispositif antivibratoire destiné à équiper un câble comprenant une gaine extérieure flexible et une âme intérieure, travaillant en traction, montée à coulissement dans ladite gaine. De tels câbles, encore appelés câbles Bowden, sont montés sur les véhicules automobiles pour relier un organe actionneur constitué par exemple par une pédale d'accélérateur, de frein ou d'embrayage située dans l'habitacle au véhicule à un organe récepteur associé, placé dans le compartiment moteur. L'organe récepteur, proche du moteur, transmet les vibrations de ce dernier au câble de commande et ces dernières parcourent l'ame du câble pour aboutir dans l'habitacle du véhicule, où elles augmentent le niveau de bruit et constituent une source d'inconfort pour le conducteur lors du contact avec l'organe actionneur.

On a cherché à éviter la transmission des vibrations du moteur en interposant un organe élastique entre l'âme du câble et l'organe récepteur. Cet organe élastique doit satisfaire à trois conditions : la perte de course du câble doit être réduite au minimum, l'organe élastique doit présenter des dimensions compatibles avec l'espace disponible dans le compartiment moteur pour le montage du câble, et une rupture de l'organe élastique ne doit pas entraîner la perte de contrôle du véhicule. On a proposé de réaliser l'organe élastique sous la forme d'un manchon en matériau élastomère enfilé sur l'âme du câble, s'ajustant étroitement sur celui-ci, et s'interposant axialement par ses faces frontales entre un embout d'extrémité du câble et une fourchette de commande de l'organe récepteur. Ce dispositif antivibratoire connu n'offre pas entière satisfaction car le manchon flue lorsqu'une forte traction est exercée sur le câble, avec l'inconvénient de venir serrer radialement ce dernier, de s'user et perdre son efficacité antivibratoire. Il n'est pas possible en général, pour remédier à cet inconvénient, de surdimensionner le manchon, car l'espace libre disponible pour le montage du manchon entre l'embout d'extrémité et l'organe récepteur est limité, de sorte que l'on se contente avec les dispositifs antivibratoires connus de ce type d'une filtration peu satisfaisante des vibrations. De GB-A-2 180 907, il est connu un dispositif antivibratoire selon le préambule de la revendication 1, dans lequel un manchon en matériau élastomère est monté entre un embout d'extrémité (première pièce de support) du câble et une pédale d'accélérateur (organe actionneur; deuxième pièce de support).

La présente invention a pour objet un dispositif antivibratoire perfectionné remédiant aux inconvénients des dispositifs connus, notamment un dispositif qui satisfasse aux trois conditions précitées tout en continuant à offrir une filtration efficace des vibrations lorsqu'une forte traction est exercée sur le câble.

L'invention y parvient par le fait que le dispositif comporte un corps en matériau élastomère travaillant en compression, monté entre une première et une deuxième pièces de support respectivement reliées à deux tronçons de câble. Le dispositif antivibratoire selon l'invention est ainsi avantageusement monté sur le trajet du câble en un emplacement éloigné de l'embout d'extrémité relié à l'organe récepteur ou à l'organe actionneur.

Dans une réalisation préférée de l'invention, l'organe élastique est constitué d'un corps en matériau élastomère ayant la forme d'une bague et d'un manchon métallique central, la première pièce de support comporte une chape fixée à un tronçon de câble et un axe maintenu par la chape, sur lequel est enfilé ledit manchon, et la deuxième pièce de support comporte un collier relié à l'autre tronçon de câble, entourant ledit corps.

D'autres caractéristiques et avantages de la présente invention apparaîtront à la lecture de la description détaillée qui va suivre, d'un exemple de réalisation non limitatif de l'invention, et à l'examen du dessin annexé sur lequel :
- la figure 1 est une vue de dessus d'un dispositif antivibratoire conforme à un premier mode de réalisation de l'invention,
- la figure 2 est une coupe selon le trait de coupe II-II de la figure 1,
- la figure 3 est une vue de dessus de la deuxième pièce de support équipée du corps en matériau élastomère, et
- la figure 4 est une vue de côté selon la flèche IV de la figure 3.

Le dispositif antivibratoire représenté sur les figures est monté conformément à l'invention entre deux tronçons A, B d'un câble de commande équipant un véhicule automobile et travaillant en traction. Le tronçon A est guidé à coulissement par une gaine flexible non représentée jusqu'à un organe actionneur situé dans l'habitacle du véhicule tandis que le tronçon B s'étend nu jusqu'à l'organe récepteur associé. On peut bien entendu, sans sortir du cadre de l'invention, monter le tronçon de câble B à l'intérieur d'une gaine flexible et permuter le rôle des tronçons A et B, le tronçon B étant alors relié à l'organe récepteur et le tronçon A à l'organe actionneur. On peut encore monter les deux tronçons à coulissement dans des gaines flexibles.

Un organe élastique 40 travaillant en compression est disposé entre une première 20 et une deuxième 30 pièces de support respectivement reliées aux tronçons A et B. L'organe élastique 40 est constitué dans l'exemple de réalisation représenté sur les figures par un corps en matériau élastomère 41 ayant la forme générale d'une bague et d'un manchon métallique central 60.

Avantageusement, comme représenté, la première pièce de support 20 comporte une chape métallique présentant deux flasques 21, 22 plans et parallèles entre eux, reliés par une embase plane 23 perpendiculaire aux flasques. Ces derniers sont ajourés en regard l'un de l'autre pour le montage entre ceux-ci d'un axe 50. Cet axe est destiné à retenir l'organe élastique 40 sur la première pièce de support 20. Dans l'exemple de réalisation décrit, l'axe 50 est constitué par un rivet présentant un corps cylindrique de révolution, s'étendant selon une direction X perpendiculaire au plan des flasques entre les faces internes en regard de ces derniers, et muni à ses extrémités de têtes 51, 52 venant en appui axialement sur les faces externes de ceux-ci.

L'embase 23 est prolongée du côté opposé aux flasques 21, 22 par un fût cylindrique 24 rapporté perpendiculairement sur celle-ci à une extrémité axiale et dans lequel est serti le tronçon A à une extrémité. La première pièce de support 20 présente une forme généralement symétrique par rapport à un plan médian perpendiculaire à l'embase 23 et parallèle aux flasques 21, 22, ce plan médian contenant la direction du tronçon A en son point d'attache sur la pièce 20.

La deuxième pièce de support 30 comporte un collier métallique 31 s'appliquant radialement, par sa circonférence interne, sur la surface radialement externe du corps 41. Le collier 31 est prolongé radialement vers l'extérieur par un fût cylindrique 32 dans lequel est serti le tronçon B à une extrémité. La deuxième pièce de support 30 présente une forme généralement symétrique par rapport à un plan médian perpendiculaire à l'axe du collier 31 et contenant la direction du tronçon B en son point d'attache sur celle-ci. Ce plan est confondu avec le plan médian de symétrie de la première pièce de support 20 lorsque les deux pièces de support sont assemblées, les fûts cylindriques 24 et 32 étant alors alignés.

Le manchon 60 est rapporté dans un perçage central du corps en matériau élastomère 41 avant sa mise en place entre les flasques 21 et 22 de la première pièce de support 20. Ce manchon métallique définit un passage interne, cylindrique de révolution autour de l'axe X, de diamètre légèrement supérieur à celui du corps cylindrique du rivet, de manière à permettre une introduction aisée de ce dernier lors du montage tout en évitant un jeu radial trop important qui conduirait à une perte de course du câble.

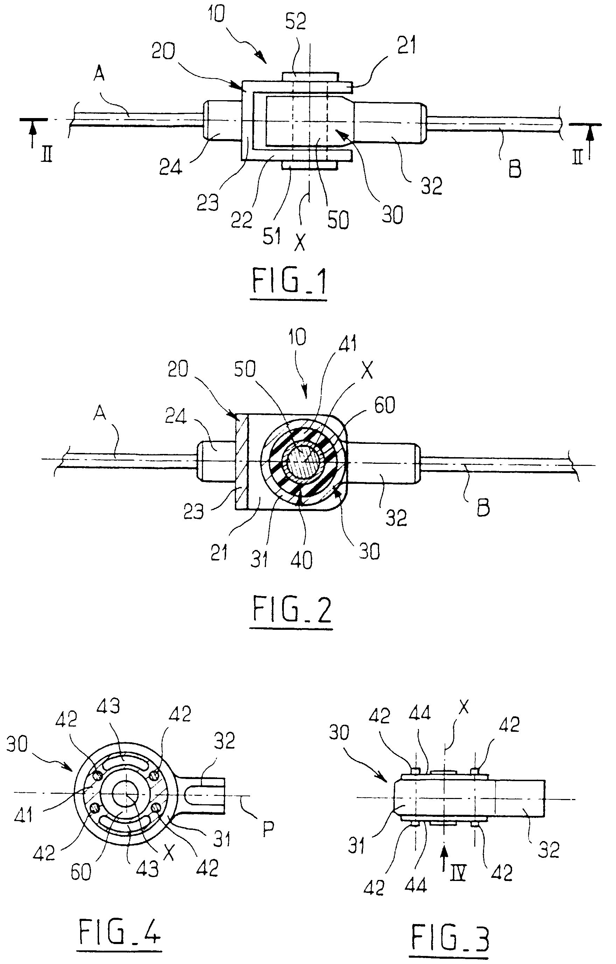

Le corps 41 comporte avantageusement des faces frontales 44 symétriques l'une de l'autre par rapport au plan médian précité des première et deuxième pièces de support. L'épaisseur du corps 41, mesurée selon l'axe X entre les faces 44, est supérieure à celle du collier 31, de sorte que le corps 41 déborde de part et d'autre du collier 31. Chaque face 44 présente une surface généralement plane, perpendiculaire à l'axe X, sur laquelle des picots 42, forment saillie. Dans l'exemple décrit, ces picots 42, au nombre de quatre, sont angulairement équirépartis autour de l'axe X. Les picots 42 sont appelés à venir en butée contre les surfaces en regard des flasques 21 et 22 en cas de sollicitation du corps 41 exercée selon la direction X. Deux évidements curvilignes 43, non représentés sur la figure 2 dans un souci de clarté du dessin, sont ménagés sur le corps 41 symétriquement l'un de l'autre par rapport à un plan contenant l'axe X et la direction des tronçons A et B en leur point d'attache sur la première et la deuxième pièces de support respectivement. Les évidements 43 traversent le corps 41 selon son épaisseur, et s'étendent chacun angulairement selon un arc de cercle centré sur l'axe X sur 70° environ.

Le dispositif antivibratoire selon l'invention assure en toutes circonstances une filtration efficace des vibrations se propageant sur le câble de commande. Une tentative d'explication de l'efficacité de la filtration ainsi obtenue peut être trouvée dans la forme du corps 41 en matériau élastomère. Lorsque le câble est soumis à une traction, le corps 41 est comprimé radialement sur un secteur de sa périphérie entre l'axe 50 et le collier 31, ce qui entraîne dans la portion comprimée une déformation élastique du matériau élastomère et une augmentation de l'épaisseur. Grâce aux picots 42, un jeu suffisant est toutefois maintenu entre les faces 44 et les flasques 21 et 22, de sorte que la portion comprimée du corps en élastomère 41 n'est pas serrée entre les faces en regard des flasques 21, 22 et conserve une capacité de filtration des vibrations. La portion radiale opposée, non comprimée, du corps 41 en matériau élastomère participe à l'amortissement des vibrations lorsque la traction du câble est relâchée et que la portion comprimée de la bague tend, dans son mouvement de retour, à entraîner l'axe 50 dans la direction opposée au tronçon B. Les évidements 43 permettent une plus grande déformabilité du corps 41 dans une direction transversale à la direction des tronçons A et B en leur point d'attache sur la première et la deuxième pièces de support, et participent ainsi également à la filtration des vibrations.

Finalement, la filtration des vibrations s'effectue avec une perte de course très faible, et le dispositif antivibratoire selon l'invention garantit le maintien du contrôle du véhicule en cas de rupture du matériau élastomère, par la venue en butée du collier 31 contre l'axe 50.

## Revendications

1. Dispositif antivibratoire (10) destiné à équiper un câble de commande travaillant en traction pour filtrer des vibrations se propageant sur le câble, ce dispositif comprenant un organe élastique travaillant en compression, l'organe élastique (40) comprenant un corps en matériau élastomère (41) monté entre une première (20) et une deuxième (30) pièces de support une des pièces de support étant reliée à un tronçon dudit câble caractérisé en ce que la première et la deuxième pièces de support sont respectivement reliées à deux tronçons (A, B) dudit câble pour filtrer les vibrations se propageant d'un tronçon à l'autre.

2. Dispositif selon la revendication 1, caractérisé en ce que l'organe élastique est constitué d'un corps en matériau élastomère (41) ayant la forme d'une bague, et d'un manchon métallique central (60), en ce que la première pièce de support (20) comporte une chape fixée à un tronçon (A) de câble, un axe (50) maintenu par la chape et sur lequel est enfilé ledit manchon (60), et en ce que la deuxième pièce de support (30) comporte un collier (31) relié à l'autre (B) tronçon de câble et entourant ledit corps en matériau élastomère (41).

3. Dispositif selon la revendication 2, caractérisé en ce que le corps en matériau élastomère (41) est muni de picots (42) formant saillie sur chacune de ses faces frontales (44), aptes à venir en butée avec des surfaces en regard de la chape de la première pièce de support (20).

4. Dispositif selon l'une des revendications 2 et 3, caractérisé en ce que le corps en matériau élastomère (41) présente deux évidements curvilignes (43) centrés sur un axe de symétrie (X) du corps (41) et symétriques l'un de l'autre par rapport à un plan contenant celui-ci et la direction des tronçons (A, B) en leur point d'attache sur les première et deuxième pièces de support.

5. Dispositif selon l'une des revendications 2 à 4, caractérisé en ce que ledit axe (50) de maintien du corps (41) est constitué par un rivet.

6. Dispositif selon l'une des revendications 1 à 5, caractérisé en ce que la première (20) et la deuxième (30) pièces de support sont serties sur les tronçons de câble (A, B).

7. Commande à câble Bowden équipée du dispositif antivibratoire (10) selon l'une des revendications précédentes.

## Patentansprüche

1. Schwingungsdämpfende Vorrichtung (10) für ein Steuerzugkabel zum Filtern von Schwingungen, die sich am Kabel fortpflanzen, welche Vorrichtung ein auf Kompression beanspruchtes elastisches Element umfaßt, welches elastische Element (40) einen Körper (41) aus einem Elastomermaterial umfaßt, der zwischen einem ersten Halteteil (20) und einem zweiten Halteteil (30) angebracht ist, von denen ein Halteteil mit einem Teilstück des Kabels verbunden ist, dadurch gekennzeichnet, daß das erste und das zweite Halteteil jeweils mit zwei Teilstücken (A, B) des Kabels verbunden sind um Schwingungen zu filtern, die sich von einem Teilstück zum anderen fortpflanzen.

2. Vorrichtung nach Anspruch 1, dadurch gekennzeichnet, daß das elastische Element aus einem ringförmigen Körper (41) aus einem elastischen Material und einer zentralen metallischen Hülse (60) besteht, das erste Halteteil (20) eine Kappe aufweist, die an einem Teilstück (A) des Kabels befestigt ist, wobei eine Achse (50) durch die Kappe gehalten ist, auf die die Hülse (60) aufgezogen ist und daß das zweite Halteteil (30) einen Kranz (31) aufweist, der mit dem anderen Teilstück (B) des Kabels verbunden ist, und den Körper (41) aus einem elastomeren Material umschließt.

3. Vorrichtung nach Anspruch 2, dadurch gekennzeichnet, daß der Körper (41) aus einem elastomeren Material mit Zähnen (42) versehen ist, die Vorsprünge auf jeder seiner Stirnflächen (44) bilden und zur Anlage an den gegenüberliegenden Außenflächen der Kappe des ersten Halteteils (20) kommen können.

4. Vorrichtung nach einem der Ansprüche 2 und 3, dadurch gekennzeichnet, daß der Körper (41) aus einem elastomeren Material zwei gekrümmte Vertiefungen (43) aufweist, die um eine Symmetrieachse (X) des Körpers (41) zentriert und bezüglich einer Ebene zueinander symmetrisch sind, die diese Achse und die Richtung der Teilstücke (A, B) an ihrer Stelle der Befestigung an dem ersten und dem zweiten Halteteil enthält.

5. Vorrichtung nach einem der Ansprüche 2 bis 4, dadurch gekennzeichnet, daß die Achse (50) zum Halten des Körpers (41) aus einem Niet besteht.

6. Vorrichtung nach einem der Ansprüche 1 bis 5, dadurch gekennzeichnet, daß das erste Halteteil (20) und das zweite Halteteil (30) an die Teilstücke (A, B) des Kabels gekrimpt sind.

7. Bowdenzug mit einer schwingungsdämpfenden Vorrichtung (10) nach einem der vorhergehenden Ansprüche.

## Claims

1. Anti-vibration device (10) intended to be fitted to a traction-operated control cable in order to filter out vibrations propagated along the cable, this device comprising an elastic member that works in compression, the elastic member (40) comprising a body made of elastomeric material (41) mounted between a first support piece (20) and a second support piece (30), one of the support pieces being connected to a length of the said cable, characterized in that the first support piece and second support piece are connected to two respective lengths (A, B) of the said cable in order to filter out vibration propagated from one length to the other.

2. Device according to Claim 1, characterized in that the elastic member consists of a body made of elastomeric material (41) in the shape of a ring, and of a central metal sleeve (60), in that the first support piece (20) comprises a yoke fixed to one length (A) of cable, a pin (50) held by the yoke and over which the said sleeve (60) is slipped, and in that the second support piece (30) comprises a collar (31), connected to the other (B) length of cable and surrounding the said body made of elastomeric material (41).

3. Device according to Claim 2, characterized in that the body made of elastomeric material (41) has studs (42) projecting from each of its front faces (44) capable of coming up against surfaces opposite belonging to the yoke of the first support piece (20).

4. Device according to either of Claims 2 and 3, characterized in that the body made of elastomeric material (41) has two curved recesses (43) centred on an axis of symmetry (X) of the body (41) and symmetric with one another with respect to a plane containing this axis and the direction of the lengths (A, B) at their point of attachment to the first and second support pieces.

5. Device according to one of Claims 2 to 4, characterized in that the said pin (50) for holding the body (41) in place consists of a rivet.

6. Device according to one of Claims 1 to 5, characterized in that the first support piece (20) and second support piece (30) are crimped to the lengths of cable (A, B).

7. Bowden-cable control equipped with the anti-vibration device (10) according to one of the preceding claims.
